Europäisches Patentamt

**European Patent Office**

Office européen des brevets

(19)

(11) Publication number: **0 160 299**
**A2**

# (12) EUROPEAN PATENT APPLICATION

(21) Application number: **85105262.1**

(51) Int. Cl.⁴: **A 01 G 25/06**

(22) Date of filing: **30.04.85**

(30) Priority: **30.04.84 US 605271**

(43) Date of publication of application:
**06.11.85 Bulletin 85/45**

(84) Designated Contracting States:
**DE FR GB IT NL**

(71) Applicant: **Rain Bird Sprinkler Mfg. Corp.**
**19217 E. Foothill Boulevard**
**Glendora California 91740(US)**

(72) Inventor: **Brown, Richard D.**
**1757 Deerview**
**Glendora California(US)**

(72) Inventor: **Plotkin, Mathias**
**9371 Portsmouth Drive**
**Huntington Beach California(US)**

(72) Inventor: **Pitchford, Edward Julian**
**1324 E. Hidden Springs Lane**
**Glendora California(US)**

(74) Representative: **Baillie, Iain Cameron et al,**
**c/o Ladas & Parry Isartorplatz 5**
**D-8000 München 2(DE)**

(54) **Continuous tube emitter.**

(57) A continuous tube emitter and method of manufacture. The emitter comprises an elongated flexible plastic tube with a plurality of pressure-responsive flow control units internally overlying small outlet openings in the tube to control the flow rate of irrigation water through the outlet openings. The flexible plastic tube is formed from an elongated thin-walled web preferably having a plurality of flow control patches on one side, wherein each patch has a valve face defined by at least one shallow drip emission groove leading into a shallow valve recess of wider cross section. Small outlet openings are cut through the web and the valve recesses. A longitudinal margin of the web is trimmed to form laterally projecting flaps at longitudinal positions generally corresponding with the flow control patches. The web is then rolled and longitudinally seamed to form the continuous tube emitter with the flaps each internally overlying the valve recess and a portion of the drip emission groove of the aligned patch.

CONTINUOUS TUBE EMITTER

BACKGROUND OF THE INVENTION

This invention relates generally to irrigation equipment of a type designed for delivering irrigation water to crops and the like at a relatively slow, substantially drip flow rate. More particularly, this invention relates to an improved and economical continuous tube emitter and its method of manufacture, wherein the continuous tube emitter has a plurality of outlet openings through which the flow rate of irrigation water is controlled and regulated in response to water supply pressure.

A variety of so-called continuous tube emitters for irrigation purposes are generally known in the art. Such continuous tube emitters typically comprise an elongated tube of rigid or flexible construction having a plurality of outlet openings formed along its length and through which irrigation water is discharged at a relatively slow, substantially drip flow rate, such as a flow rate less than one gallon per hour. With such devices, irrigation water can be supplied at selected points to crops and the like without significant water waste from evaporation and further without significant soil erosion.

Previously available continuous tube emitters have utilized many different structural techniques intended to leak water slowly through outlet openings at spaced intervals along the length of the tube. For example, continuous tube emitters have been suggested with fibrous or other porous substances occluding the outlet openings to permit slow water leakage therethrough, such as those devices depicted in U.S. Patent Nos. 3,777,987 and 3,799,442. Other continuous tube emitter designs have proposed concentric or multiple tube constructions wherein irrigation water is leaked through a series of small pressure- and flow- reducing orifices. See, for example, the emitter designs shown and described in U.S. Patent Nos. Re.28,095; 3,361,359; 3,672,571 and 3,903,929. Still other tube emitter designs have proposed relatively complex and elongated or labyrinth flow path configurations for reducing the flow rate and pressure of water discharged through outlet openings, such as those devices depicted in U.S. Patent Nos. 4,002,384; 4,077,570 and 4,077,571. However, in these exemplary continuous tube emitter designs, the requisite low water flow rates have generally required outlet openings or leakage paths of small cross-sectional area which are highly susceptible to clogging by dirt or other particulate matter commonly present in most water supply systems. Accordingly, these various emitter tube configurations have frequently required costly water filtration equipment to prevent frequent clogging whereby these devices generally have not gained widespread commercial acceptance.

In an effort to provide drip discharge of irrigation water without significant clogging risk, a variety of improved emitter designs have been proposed to include means for flushing particulate from water outlet openings. These improved emitter designs generally have used water openings of larger cross section in combination with movable valve members responsive to water supply pressure for allowing relatively high flushing flows through the outlet openings when the water pressure is low but partially blocking the outlet openings during higher water pressures to reduce water flow to a substantially drip rate. In many proposed emitter designs, these pressure-responsive movable valve members have been mounted within individual valve housings which are mounted in turn upon an elongated water supply tube, such as depicted in U.S. Patent Nos. 3,693,888; 3,779,468; 3,807,430 and 3,954,223. However, the addition of movable valve members and attendant housings substantially and undesirably increases the complexity and cost of the emitter tube system, particularly when used for irrigating large agricultural areas. Moreover, such emitter designs are not well adapted for optional installation underground prior to planting of a crop, nor have such emitter designs been compatible for use with inexpensive flexible plastic water supply tubing.

Still other continuous tube emitter designs have been proposed which incorporate movable valve members into an elongated water supply tube which, in some designs, can be formed from a flexible plastic material for expansion and contraction in response to changing water pressure. See, for example, U.S. Patent Application Serial No. B570,382, published April 13, 1976 and U.S. Patent Nos. 3,797,754 and 4,009,832. However, these continuous tube emitter configurations specifically require relatively complex tube wall geometries requiring special prefabricated and relatively thick tube-forming materials. In addition, these emitter configurations have generally required complex geometries for the movable valve members which are then installed within the tubes by techniques which are incompatible with economical high rate production processes. As a result, these previous continuous tube emitter designs have been relatively difficult and costly to manufacture thereby increasing the cost to the user sufficiently to prevent any widespread commercial adoption and use.

There exists, therefore, a significant need for an improved continuous tube emitter which can be manufactured in high production quantities and which avoids use of complex geometric shapes or costly manufacturing process steps or materials and further which will reliably provide the desired water pressure-responsive flow outputs in use. The present invention fulfills these needs and provides further related advantages.

0160299

-4-

## SUMMARY OF THE INVENTION

In accordance with the invention, an improved continuous tube emitter comprises an elongated, thin-walled flexible tube carrying a plurality of simplified flow control units for regulating the flow rate of irrigation water through outlet openings in the tube in response to water supply pressure. The flexible tube and flow control units are constructed from relatively inexpensive material and further in accordance with a new and improved process to provide a low cost emitter system which is highly reliable in use.

In a preferred form of the invention, the continuous tube emitter comprises an elongated web of flexible sheet material having longitudinal side margins and being rolled upon itself and longitudinally seamed to form a generally tubular shape. A plurality of recessed valve faces are formed on the web inside the tube and opening generally in a direction toward a longitudinal axis of said tube. Each of the recessed valve faces are defined by at least one drip emission groove opening into a valve recess of wider cross section. The valve face cooperates with the tube to define a plurality of outlet openings formed each to extend through the valve recesses and further through the tube. A plurality of flexible flaps are carried by the web and project from the web in respective overlying relation with the valve faces each to overlie the adjacent valve recess and a portion of the drop emission groove leaving another portion of the drip emission groove exposed to the interior of the tube.

In another aspect, the invention comprises an irrigation tube formed from a web of flexible sheet material rolled upon itself and longitudinally seamed to form a generally tubular shape with a central longitudinal axis. At least one flow control patch of a flexible sheet

-5-

material is mounted on the web inside the tube, the patch having a recessed valve face opening generally toward the longitudinal axis and defined by at least one drip emission groove opening into a valve recess. The patch and web cooperate to define an outlet opening formed through the valve recess and the web. At least one flexible flap is formed integrally with the web and disposed inside the tube in overlying relation with the flow control patch, the flap being shaped to substantially cover the valve face leaving a portion of the drip emission groove generally opposite the valve recess exposed to the interior of the tube.

In another aspect, the invention provides a method of making a continuous tube emitter. The method includes forming an elongated web of flexible plastic material having a pair of longitudinal side margins and a plurality of longitudinally spaced recessed valve faces opening away from the web disposed in laterally spaced relation with one of the side margins. Each valve face includes at least one drip emission groove opening into a valve recess of wider cross section and an outlet opening extending through said web in flow communication with the valve recess. A plurality of flexible flaps are provided on the web to project therefrom at longitudinal positions generally corresponding with the valve faces. The web is rolled upon itself about a longitudinal axis to form a tube with the flaps in respective internal overlying relation with the valve faces to substantially cover the valve faces leaving a portion of the adjacent drip emission groove exposed to the interior of the tube and the tube is longitudinally seamed.

## BRIEF DESCRIPTION OF THE DRAWINGS

The accompanying drawings illustrate the invention. In such drawings:

-6-

FIGURE 1 is a schematic representation depicting underground installation and use of a continuous tube emitter embodying the novel features of the invention;

FIGURE 2 is a fragmented perspective view illustrating an elongated flexible plastic web used in the formation of the continuous tube emitter;

FIGURE 3 is an enlarged fragmented perspective view illustrating installation of flow control patches onto the tube-forming web;

FIGURE 4 is a fragmented perspective view illustrating formation of outlet openings through the installed patches and tube-forming web;

FIGURE 5 is a fragmented perspective view illustrating formation of contoured valve faces on the installed flow control patches;

FIGURE 6 is an enlarged fragmented perspective view illustrating an exemplary valve face contour formed into one of the flow control patches;

FIGURE 7 is a fragmented perspective view illustrating the formation of laterally projecting flaps along one longitudinal margin of the tube-forming web;

FIGURE 8 is a fragmented perspective view illustrating trimming of excess material from the tube-forming web between the flaps;

FIGURE 9 is a fragmented plan view illustrating formation of the tube-forming web into a longitudinally elongated tubular shape;

FIGURE 10 is an enlarged transverse vertical section taken generally on the line 10-10 of FIG. 9 and illustrating the continuous tube emitter in a flushing mode of operation;

FIGURE 11 is an enlarge transverse vertical section generally similar to FIG. 10 and illustrating the continuous tube emitter in an emitter mode of operation;

FIGURE 12 is an enlarged section taken generally on the line 12-12 of FIG. 11;

FIGURE 13 is an enlarged section taken generally on the line 13-13 of FIG. 12; and

FIGURE 14 is an enlarged section generally similar to FIG. 13 and illustrating pressure compensation movement of the flap during the emitter mode of operation.

DETAILED DESCRIPTION OF THE PREFERRED EMBODIMENT

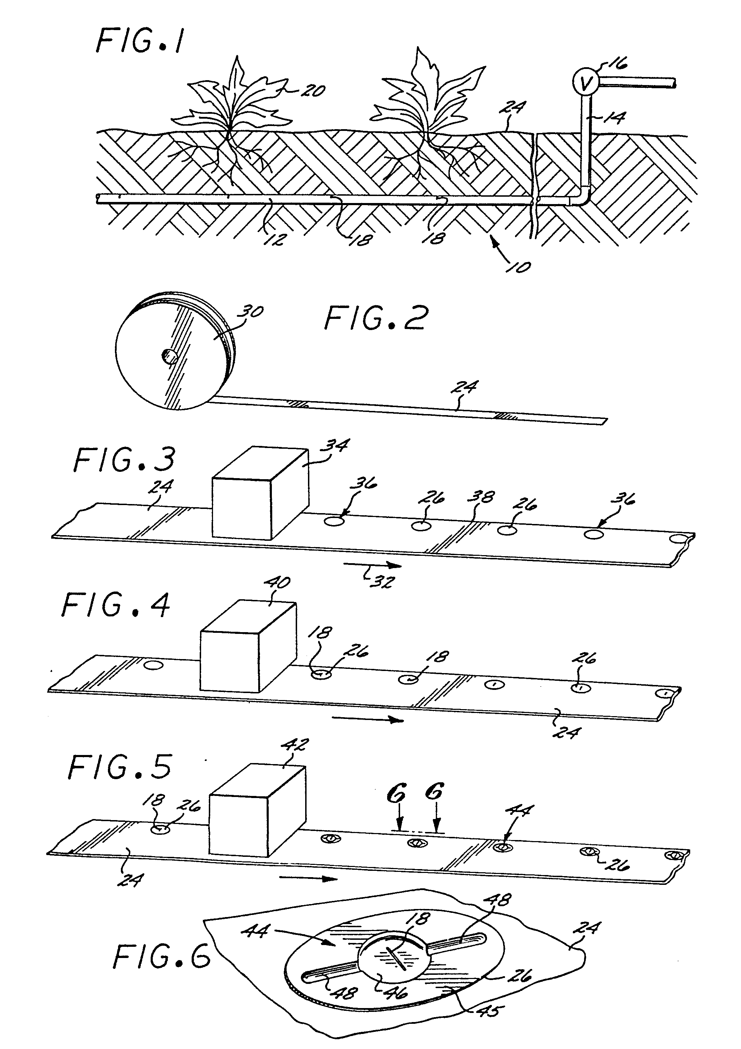

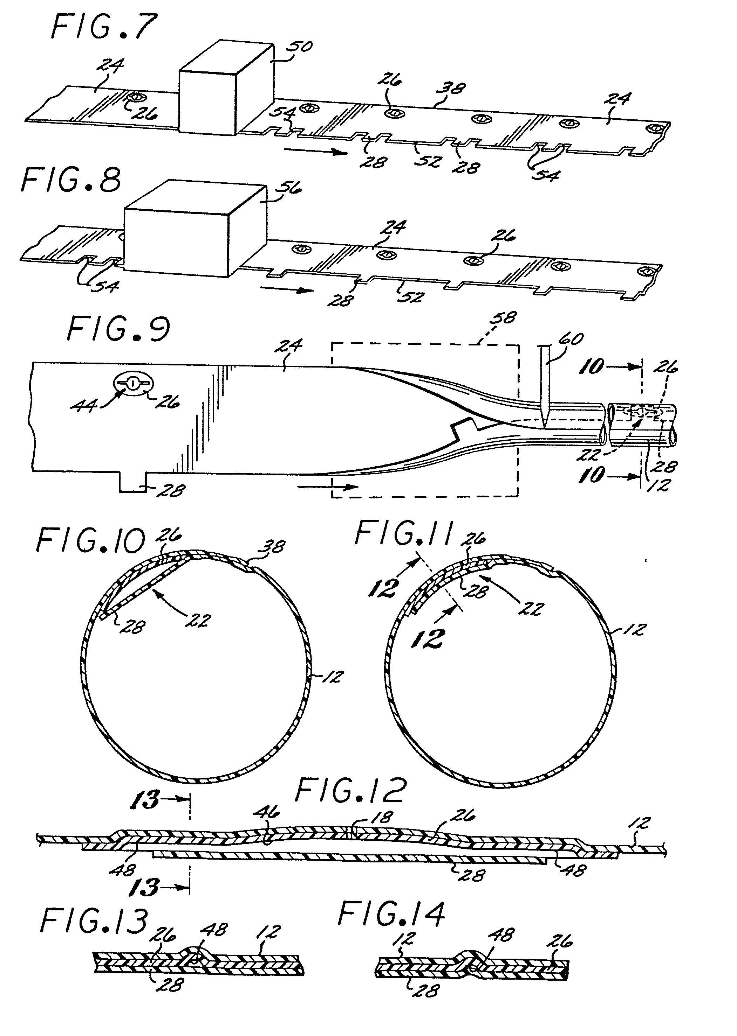

As shown in the exemplary drawings, a continuous tube emitter referred to generally in FIGURE 1 by the reference numeral 10 is provided for controlled supply of irrigation water to agricultural crops and the like. The continuous tube emitter 10 comprises an elongated, collapsible thin-walled irrigation tube 12 adapted for appropriate connection to a water supply pipe 14 including a suitable control valve 16 for controlling supply of a flow of water under pressure. A plurality of outlet openings 18 are formed at longitudinally spaced positions along the tube 12 to permit water flow from the interior to the exterior of the tube for irrigating vegetation 20, wherein the water flow rate through the outlet flow openings is controlled by pressure-responsive internal flow control units 22 (FIGS. 9-11). As illustrated in FIG. 1, the continuous tube emitter 10 can be buried below the surface 24 of the ground, or, alternatively, the tube 10 can be installed above the ground surface, if desired.

The continuous tube emitter 10 is manufactured from relatively inexpensive materials and in accordance with a new and improved manufacturing process to provide a relatively simple and highly economical continuous tube emitter system which operates reliably in use to provide the desired pressure-responsive water flow rates. More particularly, the continuous tube emitter 10 is formed from a relatively inexpensive thin-walled flat strip or web 24 (FIG. 2) of a flexible plastic material which can

-8-

be processed economically and at high production rates to form the elongated collapsible tube 12. Moreover, the flow control units 22 are also formed from relatively inexpensive flexible plastic materials including relatively small flow control patches 26 (FIG. 3) which may be secured onto the web 24 and flaps 28 (FIG. 7) formed integrally with the web 24. In use, the flow control units 22 respond in a reliable manner to water pressure within the tube 12 to permit relatively high flushing water flow rates through the outlet openings 18 when the water pressure is relatively low to flush dirt and other particulate matter from the system. At relatively higher water pressures, however, the flow control units 22 restrict the water flow through the outlet openings 18 to a relatively slow, substantially drip flow rate.

As shown in detail in FIGS. 2-9, the emitter tube 10 is formed from the elongated flat web 24 of thin-walled flexible plastic material which can be obtained economically in bulk quantity on reels 30 or the like. The elongated web 24 is provided with a width selected in accordance with the desired diametric tube size and is drawn from the reel 30 through a series of processing stations, as will be described in more detail, for relatively high production rate processing into the form of the elongated tube 12 of desired length. The thickness of the web 24 is substantially minimized for high flexibility and optimum cost efficiency while providing sufficient structural strength to withstand anticipated water pressures in use and further for attachment thereto of the flow control patches 26.

The elongated tube-forming web 24 is initially processed by conveyed passage, as depicted by arrow 32 in FIG. 3, in association with a patch installation station 34. This patch installation station 34 installs the flow control patches 26 onto the web 24 in selected longitudinally spaced relation and spaced a short distance,

-9-

as indicated by arrow 36, from one longitudinal margin 38 of the web. Conveniently, this patch installation station 34 is shown schematically in FIG. 3 and may be constructed from any patch installation and mounting apparatus known to those skilled in the art.

In the preferred form of the invention, the flow control patches 26 are formed from relatively small segments of a lightweight thermoplastic material having the illustrative generally oval configuration although alternative patch shapes, such as rectangles, squares, and the like can be used. The patch installation station places these flow control patches at the desired positions on the web 24 and securely mounts the patches in place by a heat sealing process, or by use of an appropriate adhesive or other mounting means. The longitudinally spaced positions of the patches 26 are chosen to correspond with positions for the water outlet openings 18 (FIG. 1) and such positions can be varied as required for a particular irrigation application.

Subsequent to installation of the flow control patches 26, the tube forming web 24 is conveyed into association with a cutting station 40 which forms the outlet openings 18 through the installed patches 26 and further through the underlying web 24, as shown in FIG. 4. The tube-forming web is also passed into association with an embossing station 42 which embosses a recessed valve face 44 into the side of the flow control patches 26 presented away from the web 24, as shown in FIG. 5 and 6. These cutting and embossing stations 40 and 42 include well known and conventional machine components, such as an appropriate cutting tool and an appropriate embossing tool, respectively, for cutting the outlet openings 18 and forming the valve faces 44. In the preferred process of the invention, these cutting and embossing steps are combined into a single processing station having a combined cutting/embossing tool for

-10-

simultaneously forming the outlet opening 18 and the valve face 44 in each flow control patch 26. Separate processing stations, however, may be provided for association with the web in either order.

A preferred recessed geometry for the valve face 44 formed on each flow control patch 26 is shown best in FIG. 6. As shown, the valve face 44 includes a generally flat surface 45 surrounding a shallow central valve recess 46 of generally circular shape circumscribed generally about or otherwise in flow communication with the outlet opening 18 formed as a short slit or cut in the patch 26 and further through the underlying web 24. The exemplary valve face 44 also includes a pair of shallow and relatively narrow drip emission grooves 48 opening into the valve recess 46 and projecting in opposite directions therefrom along a common axis generally parallel with the longitudinal dimension of the web 24. Alternatively, a single drip emission groove 48 can be used if reduced water flow into the valve recess 46 is desired during use.

As shown in FIG. 7, the plurality of flaps 28 are formed integrally into the web 24 by conveyed passage of the web into association with a flap cutting station 50. This cutting station 50, also depicted in schematic form, includes an appropriate cutting tool (not shown) for trimming the longitudinal margin 52 of the web 24 opposite the margin 38 to form the laterally projecting flaps 28 of generally rectangular shape bounded by a longitudinally spaced pair of small notches 54 cut into the web margin 52. Importantly, these flaps 28 are formed at longitudinally spaced positions aligned generally with respective ones of the flow control patches 26 which, in the illustrative embodiment of the invention, have already been installed onto the web 24.

The web 24 is then passed in association with a trimming station 56 which includes an appropriate tool

-11-

(not shown) of any conventional design for trimming the web margin 52 along the bases of the flap-forming recesses 54, as shown in FIG. 8. This trimming step advantageously removes extraneous plastic web material from the longitudinal margin 52 wherein this extraneous material can be reground or remelted for reuse, thereby minimizing the amount of plastic material required to form the continuous emitter tube 10 of the present invention.

After trimming, the thus-formed web 24 with the integral flaps 28 and the installed patches 26 is rolled upon itself about a longitudinal axis to form the elongated emitter tube 12, as shown in FIG. 9. This step is performed by conventional tube-forming rolling equipment 58 of a type well known to those skilled in the art and thus represented in schematic form in the accompanying drawings. When rolled to tubular shape, the flaps 28 are positioned in internally overlying relation with the respective patches 26, and a seaming tool 60 or the like connects the now slightly overlapping web margins 38 and 52 by a heat seal process or by alternative connecting means, such as use of an adhesive to form a leak-free seam running the length of the tube 12.

In use, as shown in FIG. 10-14, the flow control units 22 defined cooperatively by the thin flaps 28 and the embossed valve faces on the patches 26 regulate water flow through the outlet openings 18. More particularly, with reference to FIG. 10, water under pressure flowing through the flexible tube 12 causes the tube to inflate toward a generally circular cross-sectional shape. At lower water pressures, such as when the irrigation valve 16 (FIG. 1) is initially turned on or is turned off, water pressure within the tube 12 is insufficient to force each flap 28 radially outwardly into substantially sealed relation with the valve face 44 of the adjacent flow control patch 26. As a result, the flap 28 tends to be spaced substantially from the now-radially curved patch 26

-12-

to permit relatively free and high rate water flow to the outlet openings 18 thereby flushing dirt, grit, and other particulate from the openings 18. However, when the water pressure within the tube 12 increases to a higher level, the flap 28 is forced by the pressure within the tube into substantially sealed overlying relation with the associated patch 26 thereby restricting entry of water into the outlet opening 18 in accordance with the cross-sectional flow area provided by the drip emission grooves 48. In this regard, as shown in FIGS. 9 and 12, the longitudinal width of the flaps 28 are sufficient to overlie the associated valve recess 46 and only a portion of the drip emission grooves 48 thereby leaving the distal ends of those grooves 48 open for receiving water flow from the tube interior. The drip emission grooves 40 thus provide small cross-sectional flow areas permitting a relatively small water flow from the interior of the tube at higher water pressures for discharge through the outlet openings 18.

The flow control units 22 advantageously may be designed to provide pressure compensation to maintain water flow substantially constant throughout a range of relatively higher pressures. More particularly, as viewed in FIGS. 13 and 14, increasing water pressure within the tube 12 tends to deform the thin flexible flaps 28 partially into the associated drip emission grooves 48 to vary the unobstructed cross-sectional flow area of those grooves generally in inverse proportion with water pressure. Accordingly, the flaps throttle flow through the grooves 48 in a pressure-responsive manner to maintain the discharge flow through the outlet openings 18 substantially constant throughout a normal operating range of relatively high water pressures.

While the specific dimensions and selection of materials for the continuous tube emitter 10 of the present invention may vary widely in accordance with the

-13-

anticipated operating environment, the flow control patches 26 are most preferably formed from a lightweight plastic material selected for its capability to maintain the geometry of the embossed valve face 44 for a prolonged period of time. One preferred patch material comprises polybutylene having a thickness not greater than about 0.75 mm (30 mils) and preferably on the order of about 0.25 to 0.30 mm (10 to 12 mils). In one working example of the invention, flow control patches 26 having a thickness of about 0.25 to 0.30 mm (10 to 12 mils), a length of about 25 mm (1 inch) and a width of about 12.5 mm (0.5 inch) were embossed to have a valve face geometry including a circular valve recess approximately 5 mm (0.2 inch) in diameter and about 0.75 mm (0.03 inch) in depth. The drip emission grooves were formed to have lengths of about 5 mm (0.2 inch), widths of about 0.5 mm (0.02 inch), and a depth of about 0.13 mm (0.005 inch). Such flow control patches were installed into an elongated web having a thickness of about 0.05 + 0.10 mm (2 to 4 mils) and a width of about 70 mm (2.75 inches) wherein the web was subsequently rolled into tubular shape and seamed to provide an inside diameter of about 15 mm (0.6 inch). The flaps 28 were formed integrally with the web to have a laterally projecting length of about 10 mm (0.4 inch) and a width to expose the distal ends of the drip emission grooves for a distance of about 1 to 3 mm (0.05 to 0.1 inch).

The continuous tube emitter 10 of the present invention thus provides an effective and practical drip emitter system which can be manufactured in high production quantities from economical materials. In use, the continuous tube emitter 10 provides reliable pressure compensating flow regulation throughout a range of normal relatively high operating pressures and higher flushing discharge flows at relatively low pressures.

The size and number of emission grooves 48 may be

-14-

adjusted by those practicing the instant invention to control the drip flow rate through each emitter. Although the groove or grooves 48 are preferably arranged generally parallel to the longitudinal axis of the webs 24, these grooves may be arranged at an angle, even a right angle, to the longitudinal axis of web 24, if desired.

It has been found that patches 26 are particularly useful when the web is thin in order to help fix the embossed valve faces 24 and groove 48 in the tube. However, when thicker webs 24 are used, patches 26 may be eliminated, if desired to reduce production costs, and the embossed valve faces 24 and groove(s) 48 may be formed directly into the web 24 in that event.

Flaps 28 are preferably formed integral with web 24. However, those skilled in the art will appreciate that steps 28 can be made separated from webs and thereafter adhered to the webs 24 adjacent valve faces 24 using known adhesive or heat bonding techniques. Thus, the flaps 28 may be carried by the web either by being formed integral therewith or by being bonded thereto.

A variety of modifications and improvements to the invention described herein are believed to be apparent to those skilled in the art. Accordingly, no limitation on the invention is intended by way of the description herein, except as set forth in the appended claims.

-15-

1.  A continuous tube emitter, comprising:

an elongated irrigation tube formed from an elongated web of flexible sheet material having longitudinal side margins and being rolled upon itself and longitudinally seamed to form a generally tubular shape;

means forming a plurality of recessed valve faces on said web inside said tube and opening generally in a direction toward a longitudinal axis of said tube, each of said recessed valve faces being defined by at least one drip emission groove opening into a valve recess of wider cross section;

said valve face forming means cooperating with said tube to define a plurality of outlet openings formed each to extend through the valve recesses and further through said tube; and

a plurality of flexible flaps carried by said web and projecting from said web in respective overlying relation with said valve faces each to overlie the adjacent valve recess and a portion of the drip emission groove leaving another portion of the drip emission groove exposed to the interior of said tube.

2.  The continuous tube emitter of Claim 1 wherein said flaps are formed as an integral portion of said web and project generally laterally from one side margin thereof.

3.  The continuous tube emitter as claimed in any one of the preceding claims wherein said valve face forming means comprises a plurality of patches formed from flexible plastic material mounted onto said web.

4.  The continuous tube emitter as claimed in Claim 3 wherein the outlet openings formed in said web are formed at longitudinally spaced positions generally adjacent one of said side margins, said integrally-formed flaps projecting from the other of said side margins for respectively overlying said patches when said web is rolled upon itself to the generally tubular shape.

5. The continuous tube emitter as claimed in either Claims 3 or 4 wherein said flexible sheet material is a relatively thin-walled flexible plastic material and said flow control patches comprise individual strips of a relatively flexible plastic material.

6. The continuous tube emitter as claimed in any one of Claims 3, 4 or 5 wherein the valve face formed in each of said patches comprises an embossed valve face.

7. The continuous tube emitter as claimed in Claim 6 wherein said patches are formed from polybutylene having a thickness within the range of about 0.12 to about 0.75 mm.

8. The continuous tube emitter as claimed in any one of Claims 3-7 wherein the valve face formed in each of said patches is defined by a valve recess of generally circular shape and a plurality of drip emission grooves opening into said valve recess.

9. The continuous tube emitter as claimed in any one of claims 3-8 wherein each of said outlet openings and the adjacent generally aligned passage formed in the adjacent one of said patches comprises relatively narrow aligned slits formed respectively in said tube and the adjacent one of said patches.

10. The continuous tube emitter as claimed in any one of the preceding claims wherein said at least one drip emission groove opening into the valve recess of said valve face is oriented to extend generally in parallel with a longitudinal axis of said tube.

11. The continuous tube emitter as claimed in any one of the preceding claims wherein the valve face formed has a generally uninterrupted flat surface substantially surrounding said valve recess and said at least one drip emission groove.

12. A continuous tube emitter, comprising:

an irrigation tube formed from a web of flexible sheet material rolled upon itself and longitudinally seamed to form a generally tubular shape with a central longitudinal axis;

at least one flow control patch of a flexible sheet material mounted on said web inside said tube, said patch having a recessed valve face opening generally toward the longitudinal axis and defined by at least one drip emission groove opening into a valve recess;

said patch and web cooperating to define an outlet opening formed through said valve recess and said web; and

at least one flexible flap formed integrally with said web and disposed inside said tube in overlying relation with said flow control patch, said flap being shaped to substantially cover said valve face leaving a portion of said drip emission groove generally opposite said valve recess exposed to the interior of said tube.

13. A method of making a continuous tube emitter, comprising the steps of:

forming an elongated web of flexible plastic material having a pair of longitudinal side margins and a plurality of longitudinally spaced recessed valve faces opening away from the web disposed in laterally spaced relation with one of the side margins, each valve face including at least one drip emission groove opening into a valve recess of wider cross section and an outlet opening extending through said web in flow communication with the valve recess;

providing a plurality of flexible flaps on the web to project therefrom at longitudinal positions generally corresponding with the valve faces;

rolling the web upon itself about a longitudinal axis to form a tube with the flaps in respective internal overlying relation with the valve

-18-

faces to substantially cover the valve faces leaving a portion of the adjacent drip emission groove exposed to the interior of the tube; and

longitudinally seaming the tube.

14. The method as claimed in Claim 13 wherein said flap providing step comprises trimming one side margin of the web to form the flaps integrally with the web.

15. The method as claimed in either Claims 13 or 14 wherein said web forming step includes mounting a plurality of flow control patches onto the web, the valve faces being formed subsequently in the patches.

16. The method as claimed in Claim 15 wherein said valve face and outlet opening forming steps are performed simultaneously with respect to each patch subsequent to said mounting step.

17. The method as claimed in either Claims 15 or 16 wherein the web is formed from a flexible thin-walled plastic material and the patches are formed from a flexible plastic material, and wherein said mounting step comprises heat sealing the patches to the web.

18. The method as claimed in any one of Claims 15-17 wherein said mounting step comprises mounting the patches in slightly laterally spaced relation with a side margin of the web opposite the flaps.

19. The method as claimed in any one of Claims 15-16 wherein said valve face forming step comprises embossing the valve face in the patches.

20. The method as claimed in Claim 13 including the step of reusing portions of the web trimmed therefrom to form the flaps.

0160299

FIG.1

FIG.2

FIG.3

FIG.4

FIG.5

FIG.6

0160299

FIG.7

FIG.8

FIG.9

FIG.10

FIG.11

FIG.12

FIG.13

FIG.14